Europäisches Patentamt

European Patent Office

Office européen des brevets

(11) Publication number: **0 167 925**
**B1**

# EUROPEAN PATENT SPECIFICATION

(45) Date of publication of patent specification: **20.12.89**

(21) Application number: **85107876.6**

(22) Date of filing: **25.06.85**

(51) Int. Cl.⁴: **B 62 D 1/18**

(54) Axially and angularly adjustable steering column.

(30) Priority: **03.07.84 IT 6767984**

(43) Date of publication of application:
**15.01.86 Bulletin 86/03**

(45) Publication of the grant of the patent:
**20.12.89 Bulletin 89/51**

(84) Designated Contracting States:
**DE FR GB SE**

(56) References cited:
**FR-A-2 491 024**
**GB-A-2 116 496**
**NL-A-8 301 754**

(73) Proprietor: **IVECO FIAT S.p.A.**
**Via Puglia 35**
**I-10156 Torino (IT)**

(72) Inventor: **Rolfo, Gian Piero**
**C.so Salvemini, 65/B**
**I-10095 Grugliasco (IT)**

(74) Representative: **Boggio, Luigi et al**
**STUDIO TORTA Società Semplice Via Viotti, 9**
**I-10121 Torino (IT)**

Courier Press, Leamington Spa, England.

## Description

The present invention relates to an axially and angularly adjustable steering column. In particular, the present invention relates to a steering column provided with means which allow the adjustment in an axial and angular sense of the steering wheel with respect to the structure of the cab or passenger compartment of a vehicle, particularly an industrial vehicle.

Numerous devices which allow the adjustment of the steering column in an axial and angular sense are known.

An example of such devices is shown in GB-A-2116496, which discloses a steering column adjustable in an axial and angular sense with respect to the cab structure of a vehicle and provided with a shaft to carry, at one end, a steering wheel, said steering column comprising:

a tube which axially supports the said shaft allowing this latter to turn about its axis;

a support element for the said tube, allowing the said tube to translate in an axial sense for a distance of predetermined value and being able to effect an angular rotation with the said tube;

guide means which defines a plane in which the said angular excursion of the said support element and of the said tube takes place; and

locking means for friction locking between the support element and, respectively, the said tube and the guide means.

The above mentioned device has the drawback of requiring a rather high adjusting force, particularly in the axial sense, due to the weight of the tube, the shaft of the steering wheel and of the parts connected thereto, which have to be moved in such an adjustment.

Other drawbacks of known devices are the rather high locking force, the excessive size and weight, and the not insignificant cost of production of the various components. Further, many of such devices provide for two distinct and separate adjustments for the axial and angular positioning and therefore a further increase in costs.

The object of the present invention is that of providing an axially and angularly adjustable steering column which eliminates the aforesaid disadvantages of the known devices.

The said object is achieved with the present invention in that it relates to a steering column which is adjustable in an axial and an angular sense with respect to the structure of a vehicle cab, provided with a shaft which can carry the steering wheel at one end, and of the type comprising:

a tube which axially supports the said shaft, allowing this latter to rotate about its own axis;

a support element for the said tube, allowing the said tube to translate in an axial sense for a predetermined distance and being able to effect an angular rotation with the said tube; and

guide means which define a plane in which the said angular rotations of the said support element and the said tube take place;

single locking means used for friction locking both between the support element and the tube, and between the support element and the guide means; characterized in that it includes resilient means operable to exert an axial thrust direct from the said support element towards the said tube on the side facing the said steering wheel, and in that support element is mounted rotatably about a pin fixable to the cab structure.

For a better understanding of the present invention a preferred embodiment will now be more particularly described, purely by way of non limitative example and with reference to the attached drawings, in which:

Figure 1 is a side view of a steering column formed according to the present invention;

Figure 2 is a longitudinal section of the steering column of Figure 1;

Figure 3 is a section, on an enlarged scale and taken on a section line III-III of Figure 2; and

Figures 4 and 5 are sections on enlarged scales taken on the lines IV-IV and V-V respectively of Figure 3.

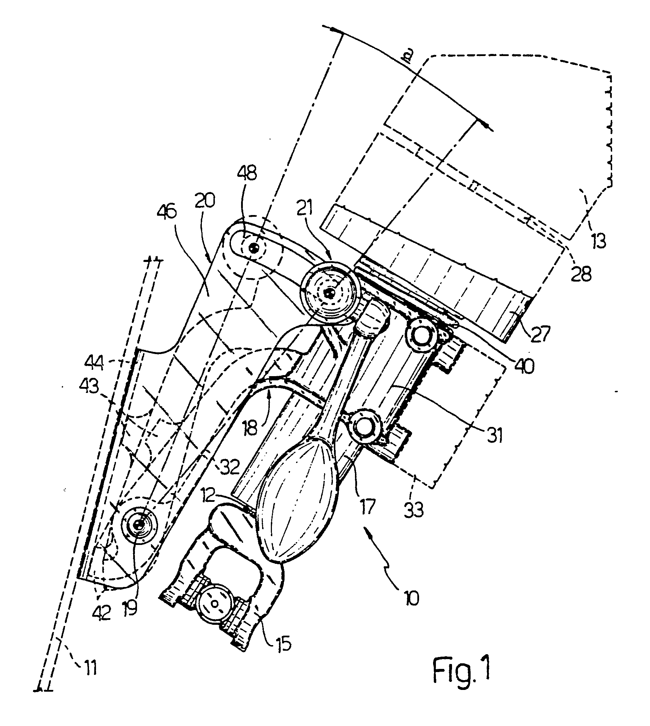

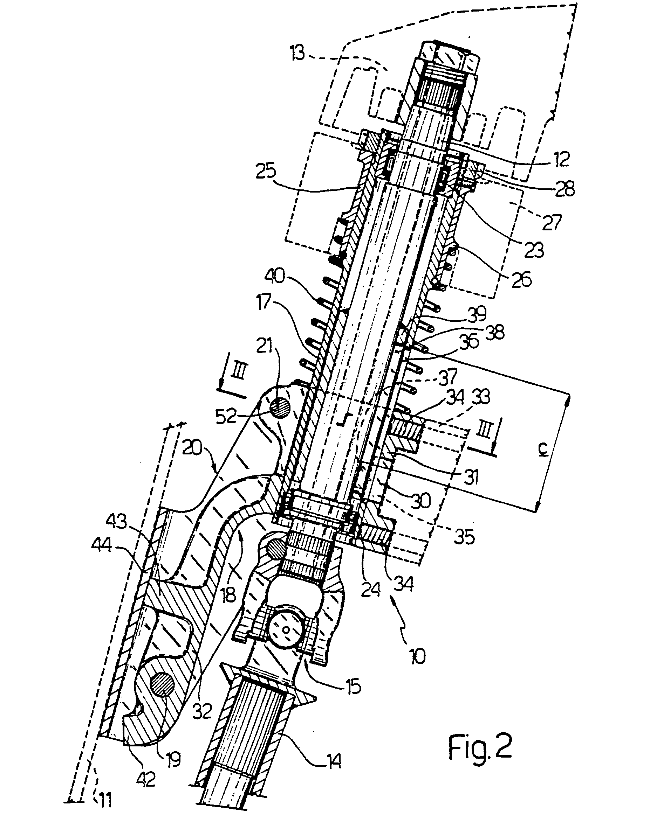

With particular reference to Figures 1 and 2, a steering column which is axially and angularly adjustable with respect to a structure 11 forming part of a cab (not illustrated) of a vehicle is generally indicated 10. The steering column 10 essentially comprises a shaft 12 which can carry at its end a hub 13 of a steering wheel (not illustrated) and can be coupled at the opposite end with a splined shaft 14 by means of a universal joint 15.

According to the present invention, the steering column 10 comprises a tube 17 which axially supports the shaft 12, a support element 18 for the tube 17, mounted rotatably about a pin 19 rigidly connected to the structure 11 of the said cab, a guide element 20 which defines an angular rotation plane for the support element 18 about the pin 19, and a locking unit 21 operable to lock, by friction, the support element 18 to, respectively, the tube 17 and the guide element 20.

In particular, the tube 17 axially supports the shaft 12 by means of a pair of rolling element bearings 23, 24 (Figure 2); around the upper part of the steering column 10, adjacent the bearing 23, there is positioned a sleeve 25 having an annular radial ridge 26 and, in turn, supporting a direction indicator and self cancelling satellite unit generally indicated 27 fixed in place by means of a ring nut 28 which is screwed onto a terminal threaded portion of the tube 17.

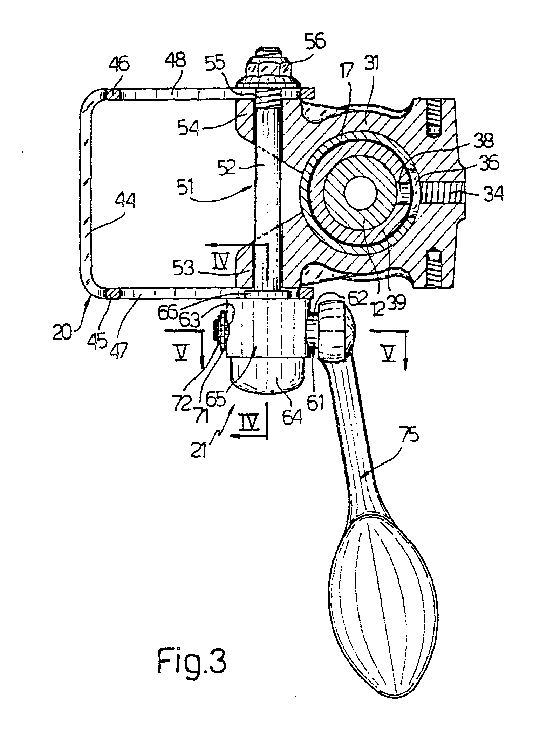

The support element 18 for the tube 17 is essentially constituted by a C-shape clamp 31 (see also Figure 3) a lower portion of which forms a projection 32 which is pivoted on the pin 19 mentioned above. In more detail, the clamp 31 surrounds the tube 17 and, in use, supports an anti-theft device generally indicated 33, which is fixed to the structure of the clamp 31 by means of screws (not illustrated) which engage corresponding threaded holes 34 formed in the body of the clamp 31. In particular, the clamp 31 has a radial through hole 30 which can be engaged by an abutment 35 (shown in broken outline) of the anti-theft device 33; this abutment 35 extends radially and engages a longitudinal slot 36 present in the tube 17 in such a way as to establish a connection for rotation of the tube 17 about its axis, as well as delimiting in an axial sense the movement of translation of the tube 17 by a value indicated c. By way of example the length of the stroke c is 60 mm. The anti-theft device 33 further includes a locking tongue indicated 37 which can be extended radially to engage a slot 38 in a tube 39 welded externally to the shaft 12 to prevent the rotation of the steering wheel when the anti-theft device is introduced.

Between the clamp 31 and the annular ridge 26 of the sleeve 25, in turn fixed to the tube 17, there is interposed a helical spring 40 which is coaxial with the tube 17 and which transmits to this latter a resilient thrust tending to cause upward displacement of the tube 17 and the associated shaft 12 which supports the steering wheel. In the region of the pin 19 the projection 32 has a rocker structure: in fact, on opposite sides of the pin 19, which constitutes the fulcrum, it has a pair of projections 42, 43 (see Figures 1 and 2) each of which is able to cooperate with a corresponding surface 44 of the guide element 20 to determine the limits of the angular rotation of the support element 18 for the tube 17. The size of such angular rotation is indicated a in Figure 1 and is conveniently 14°.

The guide element 20 is essentially constituted by a U-shape sheet metal bracket (see also Figure 3) which has an intermediate portion 44 fixed, in a manner not illustrated, to the structure 11 of the driver's cab and a pair of opposite, parallel arms 45, 46 each of which has at its end a respective slot 47, 48 in the form of a part-circular arc which defines, in a manner which will be described in more detail below, a plane in which the angular rotation of the clamp 31 with the associated tube 17 and shaft 12 can take place.

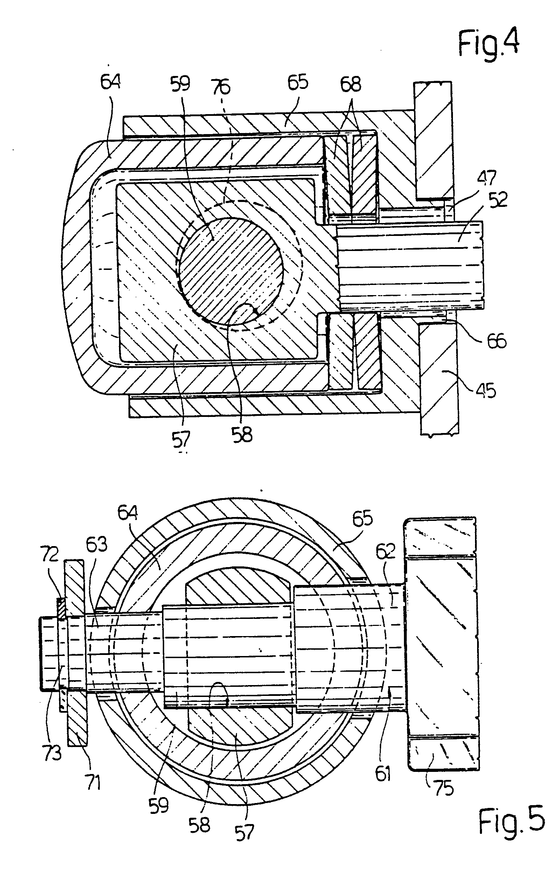

The locking unit 21 is now described with particular reference to Figures 3, 4 and 5. This unit essentially comprises a bolt 51 provided with a shank 52 which engages opposite pierced end portions 53, 54 of the clamp 31, as well as the slots 47 and 48 of the guide element 20. The shank 52 has a threaded end 55 which is engaged externally of the guide element 20 adjacent the slot 48, by a corresponding nut 56. On the opposite end of the shank 52 there is connected a head 57 (Figures 4 and 5) provided with a transverse through hole 58 within which there is rotatably fitted an eccentric cylinder 59. This latter constitutes an integral part of a shaft 61 which has coaxial cylindrical portions 62, 63 on opposite sides of the eccentric 59; such portions are rotatable in corresponding through holes formed in a cup-shape element 64 received within an open-ended cylindrical member 65 having a tubular boss 66 projecting from its base or end wall and slidable within the slot 47. Between the edge of the cup-shape element 64 and the corresponding facing surface of the open-ended cylinder 65 there is disposed a pair of counterposed conical washers 68 the purpose of which is to exercise a resilient thrust in an axial sense on the shank 52 of the bolt 51 through the head 57 of this latter.

Finally, the small shaft 61 carries at one end a washer 71 held in position by a circlip 72 which engages a corresponding annular groove 73 formed in the end portion 63 of the shaft 61 itself. At the opposite end of the shaft 61 there is rigidly connected a lever 75 by means of which the driver can cause the shaft 61 to turn about its axis in such a way as to make the eccentric 59 describe a part of a path indicated 76 in Figure 4, in that the lever 75 does not rotate through 360°.

The operation of the steering column 10 is as follows. First of all, to effect axial and angular adjustment of the position of the steering column 10 with respect to the structure 11 it is necessary to release, by means of the lever 75 and the bolt 51, the coupling between the clamp 31 and, respectively, the guide element 20 on one hand and the tube 17 on the other. In these conditions the tube 17 can slide axially with respect to the clamp 31 carrying with it the shaft 12 which supports the steering wheel; the axial movement of the shaft 12 takes place with consequent displacement of the splined shaft 14 which is coupled, in a manner not illustrated, to a further splined shaft positioned internally thereof and carrying at its end a further universal joint not illustrated. The clamp 31 is further able to turn about the pin 19 in such a way as to perform an rotation the angular extent of which, indicated with a in Figure 1 is, as already mentioned, 14° and is delimited by the cooperation between the projections 42 and 43 of the arm 32 and the facing surface of the intermediate portion 44 of the C-shape guide element 20. The driver, acting simply on the steering wheel, can select the most appropriate position of this latter both in an axial sense and in an angular sense. The force exerted by the driver is conveniently low in that the coil spring 40 is calibrated in such a way as suitably to compensate the weight of the steering wheel, the direction indicator unit 27, the tube 17 and the shaft 12. When the driver has identified the most convenient position of the steering wheel, it will be sufficient to act on the lever 75 turning this latter until the shank 52 of the bolt 51 is put into tension whereby to cause frictional clamping by the eccentric 59 consequently locking the clamp 31 with a single movement both with respect to the arms 45 and 46 of the guide element 20 and with respect to the tube 17 supporting the shaft 12. The frictional force exerted by a given movement of the lever 75 is adjusted by suitably clamping the nut 56 to determine the tension in the shank 52 for a given position of the lever 75.

From a study of the characteristics of the steering column 10 described above the advantages which it allows to be obtained are evident. First of all it is to be noted that the force required for adjusting the axial position of the steering wheel is very low due to the compensating action of the spring 40. Moreover, the force required both for the axial and angular locking is maintained low essentially by the fact that it is exercised at a considerable distance from the pin 19 about which the support element 18 rotates. Further, since the support element 18 can conveniently be made with a plastics material and/or a light alloy, whilst the guide element can be made of shaped sheet metal, it is evident that the overall weight is low. Also a considerable reduction in the overall cost can be obtained by virtue if the reduced number of working operations required for the manufacture of the steering column 10.

Finally, it is clear that the steering column 10 described above can be modified and varied without by this departing from the scope of the present invention. For example, in an equivalent form of construction the pin 19 could be positioned and supported on the structure 11 essentially in place of the shank 52 (see Figures 2 and 3) of the bolt 51 and correspondingly the guide slots 47, 48 could be disposed where the pin 19 (Figures 1 and 2) is now positioned. In such a case, the guide element 20 could be conveniently made by means of a pair of L-shape elements and joined together by means of an intermediate bracket which could perform the functions both of connecting together these L-shape elements and of supporting the pin 19 with respect to the above mentioned structure 11. Correspondingly, the projection 32 could be made in two portions extending cantilever fashion downwardly from the clamp body 31 as prolongations of the portions 53 and 54 of this latter in such a way as to support, in correspondence with the respective lower ends, the said locking unit 21.

The sliding system between portions of the projection 32 and the above mentioned L-shape elements could be equivalent to that described above. Preferably, the sliding could be facilitated by the adoption of bushes at the ends of each portion of the said projection.

**Claims**

1. A steering column (10) adjustable in an axial and angular sense with respect to the cab structure (11) of the vehicle, provided with a shaft (12) to carry, at one end, the steering wheel, and of the type comprising:

a tube (17) which axially supports the said shaft (12) allowing this latter to turn about its axis;

a support element (18) for the said tube (17), allowing the said tube (17) to translate in an axial sense for a distance (c) of predetermined value and being able to effect an angular rotation (a) with the said tube; and

guide means (20) which define a plane in which the said angular rotation of the said support element (18) and of the sid tube (17) take place;

single locking means (21) used for friction locking both between the support element (18) and, the tube (17) and between the support element (18) and the guide means (20);

characterized in that it includes resilient means (40) operable to exert an axial thrust direct from the said support element (18) towards the said tube (17) on the side facing the said steering wheel, and in that the support element (18) is mounted rotatably about a pin (19) fixable to the cab structure (11).

2. A steering column according to Claim 1, characterized by the fact that the said tube (17) supports the said shaft (12) by means of a pair of rolling element bearings (23, 24).

3. A steering column according to Claim 1 or Claim 2, characterized by the fact that the said support element (18) of the said tube (17) comprises a clamp (31) operable to clamp the said tube (17) and a projection (32) connected to the said clamp (31) rotatable about the said pin (19).

4. A steering column according to Claim 3, characterized by the fact that the said resilient means (40) comprise a coil spring (40) mounted co-axially with and externally of the said tube (17) and cooperating with said clamp (31).

5. A steering column according to any of Claims from 2 to 4, characterized by the fact that the said tube (17) has a longitudinal slot (36) which can be engaged by a first element (35) fixed with respect to the clamp (31) and operable to prevent rotation of the said tube (17) about its azis and to delimit the said translation (c) in a longitudinal sense of the said tube (17).

6. A steering column according to Claim 5, characterized by the fact that the length of the said translation (c) is of the order of 60mm.

7. A steering column according to Claim 5 or Claim 6, characterized by the fact that the said first element (35) forms part of an anti-theft device (33) fixed to the said clamp (31) the said anti-theft device (33) comprising a second element (37) translatable radially to engage a corresponding longitudinal seat (38) formed in the said shaft (12) and to prevent rotation of this latter.

8. A steering column according to any of Claims from 3 to 7, characterized by the fact that the said projection (32) of the said support element (18) is able to cooperate with the said structure (11) to delimit the said angular rotation (a) of the said support element (18).

9. A steering column according to Claim 8, characterized by the fact that the said projection (32) is shaped, in correspondence with the said pin (19), as a rocker and includes in particular a pair of projections (42, 43) positioned one on either side of the said pin (19) each of which cooperates with the said guide means (20) to delimit the said angular rotation (a).

10. A steering column according to Claim 8, characterized by the fact that the said projection (32) is essentially constituted by a first portion and a second portion, each of which extends as a cantilever from the said clamp (31) and is rotatably mounted about the said pin (19) essentially disposed in correspondence with the junction between each said portion and the said clamp (31); each said portion having a respective end cooperating with the said guide means (20) to delimit the said angular rotation (a).

11. A steering column according to any preceding Claim, characterized by the fact that the said guide means (20) are essentially constituted by a U-shape sheet metal bracket having an intermediate portion (44) fixed to the said structure (11) and two opposite parallel arms (45, 46) defining guides for the sliding of the said support element (18).

12. A steering column according to Claim 11, characterized by the fact that the said sliding guides are essentially constituted by two slots (47, 48) each of which is formed in a corresponding said arm (45, 46) of the said U-shape bracket.

13. A steering column according to Claim 12, characterized by the fact that the said slots (47, 48) are essentially in the form of arcs of a circular ring.

14. A steering column according to Claim 13, when dependent on any of Claims from 3 to 12, characterized by the fact that the said clamp (31) of the said support element (18) is slidable between the said arms (45, 46) of the said guide means (20).

15. A steering column, according to Claim 13 when dependent on Claim 10, characterized by the fact that the ends of the said portions (first and second) constituting the said projection are slidable between the said arms of the said guide means (20).

16. A steering column according to Claim 15, characterized by the fact that the end of each said portion (first and second) of the said projection carries a respective bus for guiding the sliding of the said portion with respect to the said guide means (20).

17. A steering column according to any preceding Claim, characterized by the fact that the said locking means (21) essentially comprise a bolt (51) operable to clamp the said guide means (20) with the said support element (18) and to determine the locking, by this latter, of the said tube (17).

18. A steering column according to Claim 17 when dependent from any of Claims from 12 to 14, characterized by the fact that the said bolt (51) includes a shank (52) which engages through holes formed in end portions (53, 54) of the said clamp (31) and which further engages the said slots (47, 48) of the said guide means (20).

19. A steering column according to Claim 18, characterized by that the fact the said bolt (51) has a head (57) with a through hole (58) engaged by an eccentric (59) the angular position of which is adjustable.

20. A steering column according to Claim 17, characterized by the fact that resilient means (68) are interposed between the said guide element (20) and the said head (57) of the said bolt (51).

21. A steering column according to Claim 19, characterized by the fact that the said resilient means are essentially constituted by conical washers (68) coaxially mounted with respect to the shank (52) of the said bolt (51).

22. A steering column according to any preceding Claim, characterized by the fact that the said angular rotation (a) is of the order of 14°.

23. A steering column according to any preceding Claim, characterized by the fact that the said pin (19) is fixed to the said structure (11) by means of the said guide means (20).

**Patentansprüche**

1. Lenksäule (10) verstellber in axialer und angularer Richtung in Bezug auf die Führerhausstrukturs (11) des Fahrzeugs, versehen mit einem Schaft (12), auf dem an einem Ende das Lenkrad befestigt ist und in der Art, daß er:

aus einer Röhre (17) besteht, die auf axialer Ebene diesen Schaft (12) trägt und diesem letzteren erlaubt, sich um seine Achse zu drehen;

aus einem Stützelement (18) für besagte Röhre (17) besteht, das besagter Röhre (17) erlaubt, über eine vorgegebene Distanz (c) zu arbeiten und das die angulare Rotation (a) der besagten Röhre (17) erlaubt;

und aus Vorrichtungen (20) besteht, die eine Fläche darstellen, auf der besagte angulare Rotation des Stützelements (18) und der besagten Röhre (17) stattfindet;

und aus einzelnen Sperrvorrichtungen (21) besteht, die die Reibung, sowohl zwischen Stützelement (18) und Röhre (17), als auch zwischen Stützelement (18) und Führungsvorrichtungen (20) verhindern;

dadurch gekennzeichnet, daß sie elastische Vorrichtungen (40) umfaßt, in der Art, daß sie einen axialen Druck direkt von besagtem Stützelement (18) auf besagte Röhre (17) ausüben, auf der Seite, die besagtem Lenkrad gegenüberliegt, und dadurch, daß das Stützelement (18) in der Art montiert ist, daß es um einen Bolzen (19) drehen kann und an der Führerhausstruktur (11) befestigt werden kann.

2. Lenksäule nach Anspruch 1, dadurch gekennzeichnet, daß besegte Rähre (17) besagten Scheft (12) mittels Vorrichtungen trägt, die eus einem Paar Kugellager (23, 24) bestehen.

3. Lenksäule nach Anspruch 1 oder 2, dadurch gekennzeichnet, daß besagtes Stützelement (18) der besagten Röhre (17) aus einer Klemmer (31) besteht, in der Art, daß sie besagte Röhre (17) und einen Aufsatz (32), der mit besegter Klammer (31) verbunden ist, so auf den besagten Bolzen (19) klammert, daß sie um diesen drehen können.

4. Lenksäule nach Anspruch 3, dadurch gekennzeichnet, daß besagte elastische Vorrichtungen (40) aus einer Schraubenfeder (40) bestehen, die koaxial mit und außerhalb der besagten Röhre (17) befestigt ist und mit besagter Klammer (31) zusammenarbeitet.

5. Lenksäule nach einem der Ansprüche 2 bis 4, dadurch gekennzeichnet, daß besagte Röhre (17) mit einer länglichen Nut (36) versehen ist, in die ein ersteres Element (35) eingehängt werden kann, das in Hinsicht auf die Klammer (31) befestigt ist und in der Art, daß es die Rotation der besagten Röhre (17) um ihre Achsen verhindert und besagte Übersetzung (c) in Längsrichtung der besagten Röhre (17) begrenzt.

6. Lenksäule nach Anspruch 5, dadurch gekennzeichnet, daß die Länge der besagten Übersetzung (c) bei 60 mm liegt.

7. Lenksäule nach Anspruch 5 oder 6, dadurch gekennzeichnet, daß besagtes ersteres Element (35) Teil einer Diebstahlsicherungsvorrichtung (33) ist, die an besagter Klammer (31) befestigt ist, besagte Diebstahlsicherungsvorrichtung (33) besteht aus einem zweiten Element (37) radial so übersetzber, daß darin ein entsprechender länglicher Sitz (38) eingehängt werden kann, der in besagtem Schaft (12) geformt ist und die Rotation dieses letzteren verhindert.

8. Lenksäule nach einem der Ansprüche 3 bis 7, dadurch gekennzeichnet, daß besagter Aufsatz (32) des besagten Stützelements (18) in der Lage ist, mit besagter Struktur (11) zusammenzuarbeiten, um die angulare Rotation (a) des besagten Stützelements (18) zu begrenzen.

9. Lenksäule nach Anspruch 8, dadurch gekennzeichnet, daß besagter Aufsatz (32), entsprechend zu besagtem Bolzen (19), in der Art eines Hebels geformt ist und im besonderen ein Paar Aufsätze (42, 43) umfaßt, von denen sich je einer an jeder der beiden Seiten des besagten Bolzens (19) befindet und wobei jeder mit den besagten Führungsvorrichtungen (20) zusammenarbeitet, um besagte angulare Rotation (a) zu begrenzen.

10. Lenksäule nach Anspruch 8, dadurch gekennzeichnet, daß besagter Aufsatz (32) grundsätzlich aus einem ersteren Teilstück und einem zweiten besteht, wobei jedes als Freiträger von besagter Klammer (31) abgeht und so montiert ist, daß es um besagten Bolzen (19) drehen kann, grundsätzlich in Entsprechung zu der Verbindung zwischen den beiden Teilstücken und besagter Klammer (31) befestigt; jedes dar beiden Teilstücke ist mit einem entsprechenden Ende versehen, das mit den besagten Führungsvorrichtungen (20) zusammenarbeitet, um besagte angulare Rotation (a) zu begrenzen.

11. Lenksäule nach einem der vorangegangenen Ansprüche, dadurch gekennzeichnet, daß besagte Führungsvorrichtungen (20) grundsätzlich aus einer U-förmigen metallischen Klammer bestehen, die mit einem Zwischenstück (44) versehen ist, des an besagter Struktur (11) befestigt ist und zwei gegenüberliegende parallele Arme (45, 46), die Führungen für die Bewegung des besagten Stützelements (18) darstellen.

12. Lenksäule nach Anspruch 11, dadurch gekennzeichnet, daß besagte bewegliche Führungen grundsätzlich aus zwei Nuten (47, 48) bestehen, wobei eine jede sich in einem entsprechenden der besagten Arme (45, 46) der U-förmigen Klammer befindet.

13. Lenksäule nach Anspruch 12, dadurch gekennzeichnet, daß besagte Nuten (47, 48) grundsätzlich in der Art eines Bogens eines kreisförmigen Ringes geformt sind.

14. Lenksäule nach Anspruch 13, wenn abhängig von einem der Ansprüche 3 bis 12, dadurch gekennzeichnet, daß besagte Klammer (31) des besagten Stützelements (18) zwischen besagten Armen (45, 46) der besagten Führungsvorrichtungen (20) beweglich ist.

15. Lenksäule nach Anspruch 13, wenn abhängig von Anspruch 10, dadurch gekennzeichnet, daß die Endstücke der besagten Teilstücke (ersteres und zweites), die besagten Aufsatz bilden, zwischen den besagten Arman der besagten Führungsvorrichtungen (20) beweglich sind.

16. Lenksäule nach Anspruch 15, dadurch gekennzeichnet, daß die Endstücke eines jeden der besagten Teilstücke (ersteres und zweites) des besagten Aufsatzes mit einem entsprechenden Element versehen sind, das die Bewegung des besagten Teilstückes in Bezug auf die entsprechenden Führungsvorrichtungen (20) führt.

17. Lenksäule nach einem der vorangegangenen Ansprüche, dadurch gekennzeichnet, daß besagte Sperrvorrichtungen (21) grundsätzlich aus einem Schraubenbolzen (51) bestehen, in der Art, daß er besagte Führungsvorrichtungen (20) an besagtes Stützelement (18) klammert und damit die Sperrung der besagten Röhre (17) mit Hilfe dieses letzteren verursacht.

18. Lenksäule nach Anspruch 17 wenn abhängig von einem der Ansprüche 12 bis 14, dadurch gekennzeichnet, daß besagter Schraubenbolzen (51) aus einem Fuß (52) besteht, in den Bohrungen eingehängt werden können, die sich in den Endstücken (53, 54) der besagten Klammer (31) befinden und in den weiterhin besagte Nute (47, 48) der besagten Führungsvorrichtungen (20) eingehängt werden können.

19. Lenksäule nach Anspruch 18, dadurch gekennzeichnet, daß besagter Schraubenbolzen (51) mit einem Kopf (57) versehen ist, in dessen Bohrung (58) durch eine Exzentrik (59) die angulare Position eingehängt ist, in die er verstellbar ist.

20. Lenksäule nach Anspruch 17 dadurch gekennzeichnet, daß elastische Vorrichtungen (68) zwischen besagtes Führungselement (20) und besagtem Kopf (57) des besagten Schraubenbolzens (51) eingeführt sind.

21. Lenksäule nach Anspruch 19, dadurch gekennzeichnet, daß besagte elastische Vorrichtungen grundsätzlich aus kegelförmigen Unterlagsscheiben bestehen, die koaxial in Bezug auf besagten Fuß (52) des besagten Schraubenbolzens (51) montiert sind.

22. Lenksäule nach einem der vorangegangenen Ansprüche, dadurch gekennzeichnet, daß besagte angulare Rotation (a) bei 14° liegt.

23. Lenksäule nach einem der vorangegangenen Ansprüche, dadurch gekennzeichnet, daß besagter Bolzen (19) auf besagter Struktur (11) durch Vorrichtungen der besagten Führungsvorrichtungen (20) befestigt ist.

**Revendications**

1. Colonne de direction (10) pouvant être reglée axialement et angulairement par rapport à la structure de cabine (11) du véhicule, comportant un arbre (12) destiné à porter, à une extrémité, le volant de direction et du type comprenant:

un tube (17) qui supporte axialement ledit arbre (12), permettant à ce dernier de tourner sur son axe;

un élément de support (18) pour ledit tube (17) permettant audit tube (17) d'effectuer un mouvement de translation axial sur une distance (c) de valeur prédéterminée et pouvant effectuer une rotation angulaire (a) avec ledit tube;

des moyens de guidage (20) qui définissent un plan dans lequel ladite rotation angulaire dudit élément de support (18) et dudit tube (17) a lieu;

un moyen de blocage simple (21) utilisé pour effectuer un blocage par frottement à la fois entre l'élément de support (18) et le tube (17) et entre l'élément de support (18) et le moyen de guidage (20);

caractérisée en ce qu'elle comprend un moyen élastique (40) pouvant agir de façon à exercer une poussée axiale directe dudit élément de support (18) vers ledit tube (17) sur le côté faisant face audit volant de direction, et ence que l'élément de support (18) est monté de façon à pouvoir tourner sur un axe (19) pouvant être fixé à la structure de cabine (11).

2. Colonne de direction selon la revendication 1, caractérisée par le fait que ledit tube (17) supporte ledit arbre (12) au moyen de deux paliers (23, 24) à éléments roulants.

3. Colonne de direction selon la revendication 1 ou la revendication 2, caractérisée par le fait que; ledit élément de support (18) dudit tube (17) comprend une bride (31) pouvant agir de façon à brider ledit tube (17) et une saillie (32) reliée à ladite bride (31) et pouvant tourner autour dudit axe (19).

4. Colonne de direction selon la revendication 3, caractérisée par le fait que ledit moyen élastique (40) comprend un ressort hélicoïdal (40) monté coaxialement et extérieurement audit tube (17) et coopérant avec ladite bride (31).

5. Colonne de direction selon l'une quelconque des revendications 2 à 4, caractérisée par le fait que ledit tube (17) présente une fente longitudinale (36) avec laquelle peut s'enclencher un premier élément (35) qui est fixe par rapport à la bride (31) et qui peut intervenir afin d'empêcher ledit tube (17) de tourner sur son axe et de délimiter ladite translation (c) dans un sens longitudinal dudit tube (17).

6. Colonne de direction selon la revendication 5, caractérisée par le fait que la longueur de ladite translation (c) est de l'ordre de 60 mm.

7. Colonne selon la revendication 5 ou la revendication 6, caractérisée par le fait que ledit premier élément (35) fait partie d'un dispositif antivol (33) fixé à ladite bride (31), ledit dispositif antivol (33) comprenant un second élément (37) pouvant effectuer un mouvement radial de translation pour s'enclencher avec un siège longitudinal correspondant (38) formé dans ledit arbre (12) et pour empêcher ce dernier de tourner.

8. Colonne de direction selon l'une quelconque des revendications 3 à 7, caractérisée par le fait que ladite saillie (32) dudit élément (18) de support est capable de coopérer avec ladite structure (11) pour délimiter ladite rotation angulaire (a) dudit élément (18) de support.

9. Colonne de direction selon la revendication 8, caractérisée par le fait que ladite saillie (32) est réalisée sous la forme, en correspondance avec ledit axe (19), d'un culbuteur et comprend en particulier deux saillies (42, 43) disposées à raison d'une de chaque côté dudit axe (19) et coopérant chacune avec lesdits moyens de guidage (20) pour délimiter ladite rotation angulaire (a).

10. Colonne de direction selon la revendication 8, caractérisée par le fait que ladite saillie (32) est essentiellement constituée par une première partie et une seconde partie qui s'étendent chacune en porte-à-faux à partir de ladite bride (31) et qui sont montées de façon à pouvoir tourner sur ledit axe (19) essentiellement disposé en correspondance avec la jonction entre chacune desdites parties et ladite bride (31); chacune desdites parties ayant une extrémité respective coopérant avec lesdits moyens de guidage (20) pour délimiter ladite rotation angulaire (a).

11. Colonne de direction selon l'une quelconque des revendications précédentes, caractérisée par le fait que lesdits moyens de guidage (20) sont essentiellement constitués par une console en tôle de forme en U comportant une partie intermédiaire (44) fixée à ladite structure (11) et deux bras parallèles opposés (45, 46) définissant des guides pour le glissement dudit élément de support (18).

12. Colonne de direction selon la revendication 11, caractérisée par le fait que lesdits guides de glissement sont essentiellement constitués par deux fentes (47, 48) formées chacune dans l'un, correspondant, desdits bras (45, 46) de ladite console de forme en U.

13. Colonne de direction selon la revendication 12, caractérisée par le fait que lesdites fentes (47, 48) ont essentiellement la forme d'arcs d'un anneau circulaire.

14. Colonne de direction selon la revendication 13, en dépendance de l'une quelconque des revendications 3 à 12, caractérisée par le fait que ladite bride (31) dudit élément de support (18) peut glisser entre lesdits bras (45, 46) desdits moyens de guidage (20).

15. Colonne de direction selon la revendication 13, en dépendance de la revendication 10, caractérisée par le fait que les extrémités desdites parties (première et seconde) constituant ladite saillie peuvent glisser entre lesdits bras desdits moyens de guidage (20).

16. Colonne de direction selon la revendication 15, caractérisée par le fait que l'extrémité de chacune desdites parties (première et seconde) de ladite saillie porte une douille respective pour guider le glissement de ladite partie par rapport auxdits moyens de guidage (20).

17. Colonne de direction selon l'une quelconque des revendications précédentes, caractérisée par le fait que lesdits moyens de blocage (21) comprennent essentiellement un boulon (51) pouvant être manoeuvré pour brider lesdits moyens de guidage (20) avec ledit élément de support (18) et pour déterminer le blocage, par ce dernier, dudit tube (17).

18. Colonne de direction selon la revendication 17 en dépendance de l'une quelconque des revendications 12 à 14, caractérisée par le fait que ledit boulon (51) comprend une tige (52) qui passe dans des trous formés dans des parties extrêmes (53, 54) de ladite bride (31) et qui passe en outre dans lesdites fentes (47, 48) desdits moyens de guidage (20).

19. Colonne de direction selon la revendication 18, caractérisée par le fait que ledit boulon (51) comporte une tête (57) traversée d'un trou (58) dans lequel s'engage un excentrique (59) dont la position angulaire est réglable.

20. Colonne de direction selon la revendication 17, caractérisée par le fait que des moyens élastiques (68) sont interposés entre lesdits éléments de guidage (20) et ladite tête (57) dudit boulon (51).

21. Colonne de direction selon la revendication 19, caractérisée par le fait que lesdits moyens élastiques sont essentiellement constitués des rondelles coniques (68) montées coaxialement par rapport à la tige (52) dudit boulon (51).

22. Colonne de direction selon l'une quelconque des revendications précédentes, caractérisée par le fait que ladite rotation angulaire (a) est de l'ordre de 14°.

23. Colonne de direction selon l'une quelconque des revendications précédentes, caractérisée par le fait que ledit axe (19) est fixé à ladite structure (11) à l'aide desdits moyens de guidage (20).

Fig.1

EP 0 167 925 B1

Fig. 2

2

Fig.3

Fig.4

Fig.5